# EUROPEAN PATENT SPECIFICATION

(11) **EP 4 043 525 B1**
(45) Date of publication and mention of the grant of the patent: **24.04.2024**
(21) Application number: 21824455.6
(22) Date of filing: 05.07.2021
(51) Int. Cl.: C08L 67/02, C08L 67/04, C08L 1/02, C08L 101/00, C08L 101/16

(54) **BIODEGRADABLE MATERIAL, AND RAW MATERIAL COMPOSITION, PREPARATION METHOD, AND USE THEREOF**
BIOLOGISCH ABBAUBARES MATERIAL UND ROHSTOFFZUSAMMENSETZUNG, VERFAHREN ZUR HERSTELLUNG UND VERWENDUNG DAVON
MATÉRIAU BIODÉGRADABLE, SA COMPOSITION EN MATIÈRES PREMIÈRES, SON PROCÉDÉ DE PRÉPARATION ET SON UTILISATION

(30) Priority: 28.12.2020 CN 202011585400
(43) Date of publication of application: 17.08.2022
(73) Proprietor: Shanghai Changfa New Materials Co., Ltd., Shanghai 200030 (CN)
(72) Inventor: SHI, Quentin, Shanghai 200030 (CN); JIN, Xiachao, Shanghai 200030 (CN)
(74) Representative: Bayramoglu et al.
(86) International application number: PCT/CN2021/104495
(87) International publication number: WO 2022/142240

(56) References cited:
- WO-A1-2015/042641
- CN-A- 105 273 376
- CN-A- 108 329 529
- CN-A- 109 762 307
- CN-A- 109 762 307
- CN-A- 111 825 958
- CN-A- 111 825 958
- CN-A- 111 944 289
- JIANAN FENG et al.: "Performance Comparison of Four Kinds of Straw/PLA/PBAT Wood Plastic Composites", BioResources, vol. 15, no. 2, 21 February 2020 (2020-02-21), pages 2596-2604, XP055905580,
- Yan Dongsheng, Wang Ziyu, Guo Ziyi, Ma Yongming, Wang Chengyu, Tan Haiyan, Zhang Yanhua: "Study on the properties of PLA/PBAT composite modified by nanohydroxyapatite", J MATER RES TECHNOL, vol. 9, no. 5, 30 August 2020 (2020-08-30) , pages 11895-11904, XP055905581,

## Description

### TECHNICAL FIELD

The present disclosure specifically relates to a biodegradable material, and a raw material composition, a preparation method, and use thereof.

### BACKGROUND

At present, plastics are widely used in many fields due to their advantages such as having lightweight, high strength, stable chemical properties, and a low cost. However, because there is no proper disposal method for used plastics, the pollution of plastic waste to the natural environment is getting worse, which has seriously threatened human survival. Due to the rapid deterioration of the environment, researchers have focused on the replacement of traditional petroleum-based plastics with cheap and environmentally friendly high-performance biodegradable materials. However, the high cost of the current biodegradable resins impedes popularization and applications.

The conventional biodegradable garbage bags on the market at present include in parts by weight: 35-90 parts of PBAT, 10-65 parts of PLA, 0.3-0.8 parts of antioxidant and 0.5-2 parts of benzoyl peroxide by weight (DBP). The fully biodegradable garbage bag solves the degradation problem due to the used raw materials, but has a relatively high cost.

The Chinese patent No. CN106317941A discloses a fully biodegradable garbage bag, including, in parts by weight: 35 to 55 parts of poly(butylene adipate-co-terephthalate) (PBAT), 45 to 65 parts of polylactic acid (PLA), 0.3 to 0.8 part of an antioxidant, and 0.5 to 2 parts of dibenzoyl peroxide (DBP). The fully biodegradable garbage bag solves the degradation problem due to the used raw materials, but has a relatively high cost.

CN111825958A discloses a biodegradable insect trap comprising (in parts by weight): 50 to 70 parts polybutylene adipate terephthalate (PBAT), 20 to 30 parts polylactic acid (PLA), 20 to 40 parts cellulose, 3 to 10 parts biodegradable color masterbatch/color powder, and 4 to 10 parts auxiliary agents. Cellulose however is an important raw material for many industries therefore, the cost is not very low.

CN109762307A discloses a biodegradable material suitable having sufficient strength for being used in a garbage bag, comprising PBAT 30-80 parts, PLA 5-20 parts, papermaking waste 20-60 parts and auxiliary 2-12 parts. However, some applications need good mechanical properties which are not achievable by this product.

Therefore, there is an urgent need in the art to develop a biodegradable material that involves widely-available raw materials, is easily degradable, does not pollute the environment, and has a low cost.

### SUMMARY

A technical problem to be solved by the present disclosure: In order to overcome the shortcomings in the prior art that the traditional petroleum-based plastics show poor degradation performance in nature and thus cause pollution to the environment and the existing biodegradable materials have relatively high costs, the present disclosure provides a biodegradable material, and a raw material composition, a preparation method, and use thereof. In the present disclosure, papermaking waste and cellulose are added to biodegradable resins, which greatly reduces the cost of the biodegradable material. Moreover, the present disclosure expands the use of papermaking waste and cellulose, increases the utilization of papermaking waste, and achieves the change from waste into treasure.

The present disclosure adopts the following technical solutions to solve the above technical problem:
The present disclosure provides a raw material composition of a biodegradable material, including the following components, in parts by weight: 20 to 80 parts of PBAT, 5 to 30 parts of PLA, 10 to 50 parts of papermaking waste, 5 to 40 parts of cellulose, and 2 to 15 parts of an additive.

In the present disclosure, the PBAT may account for preferably 30 to 70, more preferably 35 to 65, and further more preferably 40 to 65 parts by weight, such as 45 or 50 parts by weight.

In the present disclosure, the PLA may account for preferably 5 to 25 and more preferably 5 to 20 parts by weight, such as 10 or 15 parts by weight.

In the present disclosure, the papermaking waste may account for preferably 15 to 45 and more preferably 15 to 30 parts by weight, such as 20 parts by weight.

In the present disclosure, the cellulose may account for preferably 10 to 35, more preferably 15 to 30, and further more preferably 15 to 20 parts by weight.

In the present disclosure, the additive may account for preferably 3 to 13, more preferably 4 to 10, and further more preferably 7 to 8 parts by weight.

In the present disclosure, the additive may include one or more from the group consisting of a crosslinking agent, a plasticizer, and a lubricant that are conventionally added in the plastic processing field, for example, the additive may include the following components in parts by weight: 0.5 to 3 parts of a crosslinking agent, 1 to 8 parts of a plasticizer, and 0.5 to 3 parts of a lubricant.

The crosslinking agent can be a crosslinking agent commonly used in the art, which may preferably be one or more from the group consisting of dicumyl peroxide (DCP), benzoyl peroxide (BPO), and 2,5-dimethyl-2,5-di-(*tert*-butylperoxy)hexane, and may more preferably be DCP or BPO.

The plasticizer can be a plasticizer commonly used in the art, which may preferably be one or more from the group consisting of tributyl citrate (TBC), acetyl tributyl citrate (ATBC), glycerin, p-*tert*-butylcatechol, and epoxy soybean oil (ESO), and may more preferably be ESO, glycerin, or p-*tert*-butylcatechol.

The lubricant can be a lubricant commonly used in the art, which may preferably be one or more from the group consisting of stearic acid, butyl stearate, oleamide, ethylene bis stearamide (EBS), and calcium stearate, and may more preferably be calcium stearate.

The crosslinking agent may account for preferably 0.7 to 1.5, more preferably 0.8 to 1.2, and furthermore, preferably 0.8 to 1 part by weight.

The plasticizer may account for preferably 2 to 7 and more preferably 5 to 6 parts by weight.

The lubricant may account for preferably 1 to 2.5 and more preferably 1 to 1.5 parts by weight.

The present disclosure also provides a preparation method of a biodegradable material, where a raw material of the biodegradable material includes the raw material composition of a biodegradable material described above, and the preparation method of a biodegradable material includes the following step: subjecting the raw material of the biodegradable material to mixing and plasticizing extrusion.

Conditions and methods for the mixing can be conventional conditions and methods of such an operation in the art, and the mixing may generally be conducted in a high-speed mixer.

Conditions and methods for the plasticizing extrusion can be conventional conditions and methods of such an operation in the art, and the plasticizing extrusion may generally be conducted in a twin-screw extruder.

When the plasticizing extrusion is conducted in the twin-screw extruder, temperatures of zones 1 to 6 of the twin-screw extruder may be conventional temperatures for such an operation in the art, which may preferably be 80°C to 240°C and more preferably 80°C to 195°C.

In a preferred embodiment, when the plasticizing extrusion is conducted in the twin-screw extruder, the zones 1 to 6 of the twin-screw extruder may have temperatures of 80°C to 120°C, 120°C to 155°C, 140°C to 190°C, 145°C to 195°C, 145°C to 195°C, and 145°C to 195°C, respectively.

In another preferred embodiment, when the plasticizing extrusion is conducted in the twin-screw extruder, the zones 1 to 6 of the twin-screw extruder may have temperatures of 80°C to 110°C, 120°C to 145°C, 140°C to 170°C, 165°C to 175°C, 165°C to 195°C, and 165°C to 195°C, respectively.

In another preferred embodiment, when the plasticizing extrusion is conducted in the twin-screw extruder, the zones 1 to 6 of the twin-screw extruder may have temperatures of 80°C to 90°C, 120°C to 135°C, 160°C to 170°C, 165°C to 175°C, 165°C to 175°C, and 165°C to 175°C, respectively.

When the plasticizing extrusion is conducted in the twin-screw extruder, a temperature of a die head of the twin-screw extruder can be a conventional temperature for such an operation in the art, which may be preferably 80°C to 240°C and more preferably 150°C to 190°C, such as 160°C or 170°C.

When the plasticizing extrusion is conducted in the twin-screw extruder, a rotational speed of the twin-screw extruder may be a conventional rotational speed for such an operation in the art, which may be preferably 30 rpm to 600 rpm, more preferably 150 rpm to 300 rpm, and further more preferably 200 rpm to 250 rpm.

After the plasticizing extrusion, the preparation method of a biodegradable material may further include granulation.

The present disclosure also provides a biodegradable material prepared by the preparation method of a biodegradable material described above.

The present disclosure also provides use of the biodegradable material described above as a raw material in the preparation of a biodegradable product.

On the basis of conforming to common knowledge in the art, the above-mentioned preferred conditions can be combined arbitrarily to obtain preferred examples of the present disclosure.

The reagents and raw materials used in the present disclosure are all commercially available.

Beneficial effects of the present disclosure: In the preparation method of the present disclosure, PBAT, PLA, papermaking waste, cellulose, and an additive are thoroughly mixed and then subjected to plasticizing extrusion to obtain a biodegradable material. In the present disclosure, papermaking waste and cellulose are added to the biodegradable resins PBAT and PLA, which greatly reduces the cost of the biodegradable material, expands the use of papermaking waste and cellulose, and improves the utilization of papermaking waste and cellulose. The biodegradable material prepared by the present disclosure can be completely degraded by microorganisms in nature to finally produce carbon dioxide and water, which do not pollute the environment.

### DETAILED DESCRIPTION OF THE EMBODIMENTS

The present disclosure is further described below through examples, but the present disclosure is not limited to the scope of the described examples. The experimental methods in the following examples which are not specified with specific conditions are conducted according to conventional conditions or according to product instructions.

In the following examples, a preparation method of the cellulose includes the following steps: a plant is boiled at 100°C for 100 min in a NaOH aqueous solution with a mass percentage of 2%, and then cooled to 70°C to 80°C; hydrogen peroxide with a mass percentage of 5% is added, and a resulting mixture is incubated at 70°C to 80°C for 1 h and then filtered to obtain a filter residue; and the filter residue is washed until neutral, and then dried to obtain the cellulose.

In the following examples, the spent soda pulping liquor extract is a material remaining after paper pulp is removed during a soda pulping process.

In the following examples, the spent sulfate pulping liquor extract is a material remaining after paper pulp is removed during a sulfate pulping process.

In the following examples, the spent sulfite pulping liquor extract is a material remaining after paper pulp is removed during a sulfite pulping process.

### Example 1

A raw material composition of a biodegradable material was added to a high-speed mixer for mixing, and then subjected to extrusion and granulation in a twin-screw extruder to obtain the biodegradable material. Zones 1 to 6 of the twin-screw extruder had temperatures of 80°C, 120°C, 170°C, 195°C, 195°C, and 195°C, respectively. In the twin-screw extruder, a die head had a temperature of 190°C and a screw had a rotational speed of 300 rpm. The types and amounts of various components in the raw material composition of the biodegradable material were shown in Table 1. The PBAT had an MFR of 3 g/10 min at 190°C/2.16 kg; the PLA had an MFR of 3 g/10 min at 190°C/2.16 kg; and the papermaking waste was a 500 to 2,000-mesh dry material obtained by drying and crushing a spent soda pulping liquor extract.

**Table 1**

| Component | Specific component | Amount (parts) |
|---|---|---|
| PBAT | PBAT | 65 |
| PLA | PLA | 5 |
| Papermaking waste | Dry material obtained from a spent soda pulping liquor extract | 15 |
| Cellulose | Wood cellulose | 15 |
| Crosslinking agent | DCP | 1 |
| Plasticizer | ESO | 6 |
| Lubricant | Calcium stearate | 1 |

### Example 2

A raw material composition of a biodegradable material was added to a high-speed mixer for mixing, and then subjected to extrusion and granulation in a twin-screw extruder to obtain the biodegradable material. Zones 1 to 6 of the twin-screw extruder had temperatures of 80°C, 135°C, 140°C, 145°C, 145°C, and 145°C, respectively. In the twin-screw extruder, a die head had a temperature of 150°C and a screw had a rotational speed of 200 rpm. The types and amounts of various components in the raw material composition of the biodegradable material were shown in Table 2. The PBAT had an MFR of 5 g/10 min at 190°C/2.16 kg; the PLA had an MFR of 4 g/10 min at 190°C/2.16 kg; and the papermaking waste was a 500 to 5,000-mesh dry material obtained by drying and crushing a spent soda pulping liquor extract.

**Table 2**

| Component | Specific component | Amount (parts) |
|---|---|---|
| PBAT | PBAT | 50 |
| PLA | PLA | 20 |
| Papermaking waste | Dry material obtained from a spent soda pulping liquor extract | 15 |
| Cellulose | Cotton cellulose | 15 |
| Crosslinking agent | DCP | 1 |
| Plasticizer | ESO | 6 |
| Lubricant | Calcium stearate | 1 |

### Example 3

A raw material composition of a biodegradable material was added to a high-speed mixer for mixing, and then subjected to extrusion and granulation in a twin-screw extruder to obtain the biodegradable material. Zones 1 to 6 of the twin-screw extruder had temperatures of 90°C, 135°C, 170°C, 175°C, 175°C, and 175°C, respectively. In the twin-screw extruder, a die head had a temperature of 170°C and a screw had a rotational speed of 150 rpm. The types and amounts of various components in the raw material composition of the biodegradable material were shown in Table 3. The PBAT had an MFR of 4 g/10 min at 190°C/2.16 kg; the PLA had an MFR of 3 g/10 min at 190°C/2.16 kg; and the papermaking waste was a 50 to 5,000-mesh dry material obtained by drying and crushing a spent sulfite pulping liquor extract.

**Table 3**

| Component | Specific component | Amount (parts) |
|---|---|---|
| PBAT | PBAT | 40 |
| PLA | PLA | 40 |
| Papermaking waste | Dry material obtained from a spent sulfite pulping liquor extract | 30 |
| Cellulose | Cotton cellulose | 20 |
| Crosslinking agent | DCP | 1 |
| Plasticizer | Glycerin | 6 |
| Lubricant | Calcium stearate | 1 |

### Example 4

A raw material composition of a biodegradable material was added to a high-speed mixer for mixing, and then subjected to extrusion and granulation in a twin-screw extruder to obtain the biodegradable material. Zones 1 to 6 of the twin-screw extruder had temperatures of 120°C, 155°C, 160°C, 165°C, 165°C, and 165°C, respectively. In the twin-screw extruder, a die head had a temperature of 160°C and a screw had a rotational speed of 250 rpm. The types and amounts of various components in the raw material composition of the biodegradable material were shown in Table 4. The PBAT had an MFR of 3 g/10 min at 190°C/2.16 kg; the PLA had an MFR of 5 g/10 min at 190°C/2.16 kg; and the papermaking waste was a 200 to 3,000-mesh dry material obtained by drying and crushing a spent sulfate pulping liquor extract.

**Table 4**

| Component | Specific component | Amount (parts) |
|---|---|---|
| PBAT | PBAT | 45 |
| PLA | PLA | 25 |
| Papermaking waste | Dry material obtained from a spent sulfate pulping liquor extract | 15 |
| Cellulose | Rice straw cellulose | 15 |
| Crosslinking agent | BPO | 1 |
| Plasticizer | p-*tert*-butylcatechol | 6 |
| Lubricant | Calcium stearate | 1 |

### Example 5

A raw material composition of a biodegradable material was added to a high-speed mixer for mixing, and then subjected to extrusion and granulation in a twin-screw extruder to obtain the biodegradable material. Zones 1 to 6 of the twin-screw extruder had temperatures of 110°C, 145°C, 170°C, 175°C, 195°C, and 215°C, respectively. In the twin-screw extruder, a die head had a temperature of 150°C and a screw had a rotational speed of 200 rpm. The types and amounts of various components in the raw material composition of the biodegradable material were shown in Table 5. The PBAT had an MFR of 3 g/10 min at 190°C/2.16 kg; the PLA had an MFR of 3.5 g/10 min at 190°C/2.16 kg; and the papermaking waste was a 500 to 5,000-mesh dry material obtained by drying and crushing a spent sulfite pulping liquor extract.

**Table 5**

| Component | Specific component | Amount (parts) |
|---|---|---|
| PBAT | PBAT | 30 |
| PLA | PLA | 30 |
| Papermaking waste | Dry material obtained from a spent sulfite pulping liquor extract | 20 |
| Cellulose | Hemp cellulose | 20 |
| Crosslinking agent | BPO | 1 |
| Plasticizer | ESO | 8 |
| Lubricant | Calcium stearate | 1 |

### Example 6

A raw material composition of a biodegradable material was added to a high-speed mixer for mixing, and then subjected to extrusion and granulation in a twin-screw extruder to obtain the biodegradable material. Zones 1 to 6 of the twin-screw extruder had temperatures of 110°C, 155°C, 190°C, 195°C, 195°C, and 195°C, respectively. In the twin-screw extruder, a die head had a temperature of 190°C and a screw had a rotational speed of 300 rpm. The types and amounts of various components in the raw material composition of the biodegradable material were shown in Table 6. The PBAT had an MFR of 4 g/10 min at 190°C/2.16 kg; the PLA had an MFR of 3.5 g/10 min at 190°C/2.16 kg; and the papermaking waste was a 500 to 2,000-mesh dry material obtained by drying and crushing a spent sulfate pulping liquor extract.

**Table 6**

| Component | Specific component | Amount (parts) |
|---|---|---|
| PBAT | PBAT | 35 |
| PLA | PLA | 15 |
| Papermaking waste | Dry material obtained from a spent sulfate pulping liquor extract | 30 |
| Cellulose | Reed cellulose | 20 |
| Crosslinking agent | DCP | 1 |
| Plasticizer | Glycerin | 5 |
| Lubricant | Calcium stearate | 1 |

### Comparative Example 1

A raw material composition of a degradable material was added to a high-speed mixer for mixing, and then subjected to extrusion and granulation in a twin-screw extruder to obtain the degradable material. Zones 1 to 6 of the twin-screw extruder had temperatures of 180°C, 185°C, 190°C, 195°C, 195°C, and 195°C, respectively. In the twin-screw extruder, a die head had a temperature of 190°C and a screw had a rotational speed of 200 rpm. The types and amounts of various components in the raw material composition of the degradable material were shown in Table 7. The PBAT had an MFR of 3.5 g/10 min at 190°C/2.16 kg; and the PLA had an MFR of 3.5 g/10 min at 190°C/2.16 kg.

**Table 7**

| Component | Specific component | Amount (parts) |
|---|---|---|
| PBAT | PBAT | 80 |
| PLA | PLA | 30 |
| Crosslinking agent | DCP | 1 |
| Plasticizer | ESO | 6 |
| Lubricant | Calcium stearate | 1 |

### Comparative Example 2

A raw material composition of a degradable material was added to a high-speed mixer for mixing, and then subjected to extrusion and granulation in a twin-screw extruder to obtain the degradable material. Zones 1 to 6 of the twin-screw extruder had temperatures of 150°C, 155°C, 160°C, 165°C, 165°C, and 165°C, respectively. In the twin-screw extruder, a die head had a temperature of 160°C and a screw had a rotational speed of 130 rpm. The types and amounts of various components in the raw material composition of the degradable material were shown in Table 8. The PBAT had an MFR of 3.5 g/10 min at 190°C/2.16 kg; and the PLA had an MFR of 3.5 g/10 min at 190°C/2.16 kg.

**Table 8**

| Component | Specific component | Amount (parts) |
|---|---|---|
| PBAT | PBAT | 65 |
| PLA | PLA | 25 |
| Inorganic mineral substance | Calcium carbonate | 10 |
| Crosslinking agent | DCP | 1 |
| Plasticizer | ESO | 6 |
| Lubricant | Calcium stearate | 1 |

### Effect Example:

### The biodegradable materials prepared in Examples 1 to 6 and Comparative

Examples 1 to 2 were each made into dumbbell-shaped test strips with a length of 150 mm, a narrow width of 10 mm, and a gauge length of 75 mm, and then tested for tensile strength and elongation at break using a universal electronic tensile tester (KY8000C) according to a standard (GB/T1040.2-2006) method. Specific data were shown in Table 9.

**Table 9**

| No. | Tensile strength/MPa | Elongation at break/% |
|---|---|---|
| Example 1 | 26.2 | 276.4 |
| Example 2 | 25.8 | 251.6 |
| Example 3 | 23.8 | 244.2 |
| Example 4 | 23.6 | 241.5 |
| Example 5 | 22.9 | 241.8 |
| Example 6 | 23.1 | 223.1 |
| Comparative Example 1 | 22.6 | 295.4 |
| Comparative Example 2 | 21.4 | 233.5 |

It can be seen from the results that the introduction of papermaking waste and cellulose brings little impact on the mechanical properties of the biodegradable material, which can meet the use requirements and greatly reduce the cost.

The basic principles, main features, and advantages of the present disclosure are shown and described above. It should be understood by those skilled in the art that, the present disclosure is not limited by the above examples, and the above examples and the description only illustrate the principle of the present disclosure.

The protection scope of the present disclosure is defined by the appended claims.

## Claims

1. A raw material composition of a biodegradable material, **characterized in** comprising the following components in parts by weight: 20 to 80 parts of poly(butylene adipate-co-terephthalate) (PBAT), 5 to 30 parts of polylactic acid (PLA), 10 to 50 parts of papermaking waste, 5 to 40 parts of cellulose, and 2 to 15 parts of an additive.

2. The raw material composition of the biodegradable material according to claim 1, **characterized in that** the PBAT accounts for 30 to 70, preferably 35 to 65, more preferably 40 to 65, and further more preferably 45 or 50 parts by weight; and/or
the PLA accounts for 5 to 25, preferably 5 to 20, and more preferably 10 or 15 parts by weight; and/or
the papermaking waste accounts for 15 to 45, preferably 15 to 30, and more preferably 20 parts by weight; and/or
the cellulose accounts for 10 to 35, preferably 15 to 30, and more preferably 15 to 20 parts by weight; and/or
the additive accounts for 3 to 13, preferably 4 to 10, and more preferably 7 to 8 parts by weight.

3. The raw material composition of the biodegradable material according to any one of claims 1 to 2, **characterized in that** the additive comprises one or more from the group consisting of a crosslinking agent, a plasticizer, and a lubricant; and
preferably, the additive comprises the following components in parts by weight: 0.5 to 3 parts of a crosslinking agent, 1 to 8 parts of a plasticizer, and 0.5 to 3 parts of a lubricant.

4. The raw material composition of the biodegradable material according to claim 3, **characterized in that** the crosslinking agent is one or more from the group consisting of dicumyl peroxide (DCP), benzoyl peroxide (BPO), and 2,5-dimethyl-2,5-di-(tert-butylperoxy)hexane, and preferably is DCP or BPO; and/or
the plasticizer is one or more from the group consisting of tributyl citrate (TBC), acetyl tributyl citrate (ATBC), glycerin, p-tert-butylcatechol, and epoxy soybean oil (ESO), and is preferably ESO, glycerin, or p-*tert*-butylcatechol; and/or
the lubricant is one or more from the group consisting of stearic acid, butyl stearate, oleamide, ethylene bis stearamide (EBS), and calcium stearate, and is preferably calcium stearate; and/or
the crosslinking agent accounts for 0.7 to 1.5, preferably 0.8 to 1.2, and further more preferably 0.8 to 1 part by weight; and/or
the plasticizer accounts for 2 to 7 and preferably 5 to 6 parts by weight; and/or
the lubricant accounts for 1 to 2.5 and preferably 1 to 1.5 parts by weight.

5. A preparation method of a biodegradable material, **characterized in that** a raw material of the biodegradable material comprises the raw material composition of the biodegradable material according to any one of claims 1 to 4, and the preparation method comprises the following step: subjecting the raw material of the biodegradable material to mixing and plasticizing extrusion to obtain the biodegradable material.

6. The preparation method of a biodegradable material according to claim 5, **characterized in that** the plasticizing extrusion is conducted in a twin-screw extruder;
when the plasticizing extrusion is conducted in the twin-screw extruder, zones 1 to 6 of the twin-screw extruder have a temperature of 80°C to 240°C and preferably 80°C to 195°C;
when the plasticizing extrusion is conducted in the twin-screw extruder, a die head of the twin-screw extruder has a temperature of 80°C to 240°C, preferably 150°C to 190°C, and more preferably 160°C or 170°C;
when the plasticizing extrusion is conducted in the twin-screw extruder, the twin-screw extruder has a rotational speed of 30 rpm to 600 rpm, preferably 150 rpm to 300 rpm, and more preferably 200 rpm to 250 rpm; and
preferably, after the plasticizing extrusion, the preparation method further comprises granulation.

7. The preparation method of a biodegradable material according to claim 6, **characterized in that** when the plasticizing extrusion is conducted in the twin-screw extruder, the zones 1 to 6 of the twin-screw extruder have temperatures of 80°C to 120°C, 120°C to 155°C, 140°C to 190°C, 145°C to 195°C, 145°C to 195°C, and 145°C to 195°C, respectively;
preferably, when the plasticizing extrusion is conducted in the twin-screw extruder, the zones 1 to 6 of the twin-screw extruder have temperatures of 80°C to 110°C, 120°C to 145°C, 140°C to 170°C, 165°C to 175°C, 165°C to 195°C, and 165°C to 195°C, respectively; and
more preferably, when the plasticizing extrusion is conducted in the twin-screw extruder, the zones 1 to 6 of the twin-screw extruder have temperatures of 80°C to 90°C, 120°C to 135°C, 160°C to 170°C, 165°C to 175°C, 165°C to 175°C, and 165°C to 175°C, respectively.

8. A biodegradable material, **characterized in that** the biodegradable material is prepared by the preparation method of the biodegradable material according to any one of claims 5 to 7.

9. Use of the biodegradable material according to claim 8 as a raw material in the preparation of a biodegradable product.

## Patentansprüche

1. Rohmaterialzusammensetzung für ein biologisch abbaubares Material, **dadurch gekennzeichnet, dass** sie die folgenden Komponenten in Gewichtsanteilen umfasst: 20 bis 80 Teile Poly(butylenadipat-co-terephthalat) (PBAT), 5 bis 30 Teile Polyactid (PLA), 10 bis 50 Teile Papierherstellungsabfälle, 5 bis 40 Teile Zellulose und 2 bis 15 Teile eines Additivs.

2. Rohmaterialzusammensetzung für ein biologisch abbaubares Material nach Anspruch 1, **dadurch gekennzeichnet, dass** auf das PBAT 30 bis 70, vorzugsweise 35 bis 65, besonders vorzugsweise 40 bis 65 und ganz besonders vorzugsweise 45 oder 50 Gewichtsanteile entfallen; und/oder
auf das PLA 5 bis 25, vorzugsweise 5 bis 20 und besonders vorzugsweise 10 oder 15 Gewichtsanteile entfallen; und/oder
auf die Papierherstellungsabfälle 15 bis 45, vorzugsweise 15 bis 30 und besonders vorzugsweise 20 Gewichtsanteile entfallen; und/oder
auf die Zellulose 10 bis 35, vorzugsweise 15 bis 30 und besonders vorzugsweise 15 bis 20 Gewichtsanteile entfallen; und/oder
auf das Additiv 3 bis 13, vorzugsweise 4 bis 10 und besonders vorzugsweise 7 bis 8 Gewichtsanteile entfallen.

3. Rohmaterialzusammensetzung für ein biologisch abbaubares Material nach einem der Ansprüche 1 bis 2, **dadurch gekennzeichnet, dass** das Additiv eines oder mehrere Mittel umfasst, die aus der Gruppe ausgewählt sind, die aus einem Vernetzungsmittel, einem Plastifiziermittel und einem Schmiermittel besteht; und
vorzugsweise das Additiv die folgenden Komponenten in Gewichtsanteilen umfasst: 0,5 bis 3 Teile eines Vernetzungsmittels, 1 bis 8 Teile eines Plastifiziermittels, und 0,5 bis 3 Teile eines Schmiermittels.

4. Rohmaterialzusammensetzung für ein biologisch abbaubares Material nach Anspruch 3, **dadurch gekennzeichnet, dass** es sich bei dem Vernetzungsmittel um ein oder mehrere Mittel handelt, die aus der Gruppe ausgewählt sind, die aus Dicumylperoxid (DCP), Benzoylperoxid (BPO) und
2,5-Dimethyl-2,5-di-(tert-butylperoxy)hexan besteht, und vorzugsweise um DCP oder BPO; und/oder
es sich bei dem Plastifiziermittel und ein oder mehrere Mittel handelt, die aus der Gruppe ausgewählt sind, die aus Tributylcitrat (TBC), Acetyltributylcitrat (ATBC), Glycerin, p-tert-Butylcatechol und epoxidiertem Sojabohnenöl (ESO) besteht, und vorzugsweise um ESO, Glycerin oder p-tert-Butylcatechol; und/oder
es sich bei dem Schmiermittel um ein oder mehrere Mittel handelt, die aus der Gruppe ausgewählt sind, die aus Stearinsäure, Butylstearat, Distearylethylendiamid (EBS) und Calciumstearat besteht, und vorzugsweise um Calciumstearat; und/oder
auf das Vernetzungsmittel 0,7 bis 1,5, vorzugsweise 0,8 bis 1,2 und besonders vorzugsweise 0,8 bis 1 Gewichtsanteile entfallen; und/oder
auf die Zellulose 2 bis 7 und vorzugsweise 5 bis 6 Gewichtsanteile entfallen; und/oder
auf das Schmiermittel 1 bis 2,5 und vorzugsweise 1 bis 1,5 Gewichtsanteile entfallen.

5. Verfahren zum Herstellen eines biologisch abbaubaren Materials, **dadurch gekennzeichnet, dass** ein Rohmaterial für das biologisch abbaubare Material die Rohmaterialzusammensetzung für ein biologisch abbaubares Material nach einem der Ansprüche 1 bis 4 umfasst, und das Herstellungsverfahren den folgenden Schritt umfasst: Mischen und plastifizierendes Extrudieren des Rohmaterials eines biologisch abbaubaren Materials, um das biologisch abbaubare Material zu erhalten.

6. Verfahren zum Herstellen eines biologisch abbaubaren Materials nach Anspruch 5, **dadurch gekennzeichnet, dass** das plastifizierende Extrudieren in einem Doppelschneckenextruder durchgeführt wird;
wenn das plastifizierende Extrudieren in dem Doppelschneckenextruder durchgeführt wird, Zonen 1 bis 6 des Doppelschneckenextruders eine Temperatur von 80°C bis 240°C und vorzugsweise von 80°C bis 195°C aufweisen;
wenn das plastifizierende Extrudieren in dem Doppelschneckenextruder durchgeführt wird, ein Mundstück des Doppelschneckenextruders eine Temperatur von 80°C bis 240°C, vorzugsweise 150°C bis 190°C und besonders vorzugsweise von 160°C oder 170°C aufweist;
wenn das plastifizierende Extrudieren in dem Doppelschneckenextruder durchgeführt wird, der Doppelschneckenextruder eine Rotationsgeschwindigkeit von 30 U/min bis 600 U/min, vorzugsweise 150 U/min bis 300 U/min und besonders vorzugsweise von 200 U/min bis 250 U/min aufweist; und
vorzugsweise nach dem plastifizierenden Extrudieren das Verfahren zum Herstellen ferner ein Granulieren umfasst.

7. Verfahren zum Herstellen eines biologisch abbaubaren Materials nach Anspruch 6, **dadurch gekennzeichnet, dass**, wenn das plastifizierende Extrudieren in dem Doppelschneckenextruder durchgeführt wird, die Zonen 1 bis 6 des Doppelschneckenextruders Temperaturen von 80°C bis 120°C, 120°C bis 155°C, 140°C bis 190°C, 145°C bis 195°C, 145°C bis 195°C beziehungsweise 145°C bis 195°C aufweisen;
vorzugsweise, wenn das plastifizierende Extrudieren in dem Doppelschneckenextruder durchgeführt wird, die Zonen 1 bis 6 des Doppelschneckenextruders Temperaturen von 80°C bis 110°C, 120°C bis 145°C, 140°C bis 170°C, 165°C bis 175°C, 165°C bis 195°C beziehungsweise 165°C bis 195°C aufweisen; und
besonders vorzugsweise, wenn das plastifizierende Extrudieren in dem Doppelschneckenextruder durchgeführt wird, die Zonen 1 bis 6 des Doppelschneckenextruders Temperaturen von 80°C bis 90°C, 120°C bis 135°C, 160°C bis 170°C, 165°C bis 175°C, 165°C bis 175°C und 165°C bis 175°C aufweisen.

8. Biologisch abbaubares Material, **dadurch gekennzeichnet, dass** das biologisch abbaubare Material nach dem Verfahren zum Herstellen eines biologisch abbaubaren Materials nach einem der Ansprüche 5 bis 7 hergestellt ist.

9. Verwendung des biologisch abbaubaren Materials nach Anspruch 8 als Rohmaterial bei der Herstellung eines biologisch abbaubaren Produkts.

## Revendications

1. Composition de matière première d'un matériau biodégradable, **caractérisée en ce qu'**elle comprend les composants suivants en parties en poids : 20 à 80 parties de poly(butylène adipate-co-téréphtalate) (PBAT), 5 à 30 parties d'acide polylactique (PLA), 10 à 50 parties de déchets de fabrication de papier, 5 à 40 parties de cellulose, et 2 à 15 parties d'un additif.

2. Composition de matière première du matériau biodégradable selon la revendication 1, **caractérisée en ce que** le PBAT représente 30 à 70, de préférence 35 à 65, plus préférablement 40 à 65, et encore plus préférablement 45 à 50 parties en poids ; et/ou
le PLA représente 5 à 25, de préférence 5 à 20, en plus préférablement 10 ou 15 parties en poids et/ou
les déchets de fabrication de papier représentent 15 à 45, de préférence 15 à 30, et plus préférablement 20 parties en poids ; et/ou
la cellulose représente 10 à 35, de préférence 15 à 30, et plus préférablement 15 à 20 parties en poids ; et/ou
l'additif représente 3 à 13, de préférence 4 à 10, et plus préférablement 7 à 8 parties en poids.

3. Composition de matière première du matériau biodégradable selon l'une quelconque des revendications 1 à 2, **caractérisée en ce que** l'additif comprend un ou plusieurs du groupe constitué d'un agent de réticulation, d'un plastifiant, et d'un lubrifiant ; et
de préférence, l'additif comprend les composants suivants en parties en poids : 0,5 à 3 parties d'un agent de réticulation, 1 à 8 parties d'un plastifiant, et 0,5 à 3 parties d'un lubrifiant.

4. Composition de matière première du matériau biodégradable selon la revendication 3, **caractérisée en ce que** l'agent de réticulation est un ou plusieurs du groupe constitué de peroxyde de dicumyle (DCP), de peroxyde de benzoyle (BPO), et
de 2.5-dyméthyl-2.5-di-(tert-butyleroxy)hexane, et est de préférence du DCP ou du BPO ; et/ou
le plastifiant est un ou plusieurs du groupe constitué de citrate de tributyle (TBC), de citrate d'acétyle tributyle (ATBC), de glycérine, de p-tert-butylcatechol et d'huile de soja époxy (ESO), et est de préférence de l'ESO, de la glycérine ou du p-tert-butylcatechzol ; et/ou
le lubrifiant est un ou plusieurs du groupe constitué d'acide stéarique, de stéarate de butyle, d'oléamide, d'éthylène bis stéaramide (EBS), et de stéarate de calcium, et est de préférence du stéarate de calcium ; et/ou
l'agent de réticulation représente 0,7 à 1,5, de préférence 0,8 à 1,2, et plus préférablement 0,8 à 1 parties en poids ; et/ou
le plastifiant représente 2 à 7 et de préférence 5 à 6 parties en poids ; et/ou
le lubrifiant représente 1 à 2,5 et de préférence 1 à 1,5 parties en poids.

5. Procédé de préparation d'un matériau biodégradable, **caractérisé en ce qu'**une matière première du matériau biodégradable comprend la composition de matière première du matériau biodégradable selon l'une quelconque des revendications 1 à 4, et que le procédé de préparation comprend les étapes suivantes : soumission de la matière première du matériau biodégradable à un mélange et à une extrusion plastifiante afin d'obtenir le matériau biodégradable.

6. Procédé de préparation d'un matériau biodégradable selon la revendication 5, **caractérisé en ce que** l'extrusion plastifiante est effectuée dans une extrudeuse à double vis ;
lorsque l'extrusion plastifiante est effectuée dans l'extrudeuse à double vis, les zones 1 à 6 de l'extrudeuse à double vis ont une température de 80°C à 240°C et de préférence de 80°C à 195°C ;
lorsque l'extrusion plastifiante est effectuée dans l'extrudeuse à double vis, une tête porte-filière de l'extrudeuse à double vis a une température de 80°C à 240°C, de préférence de 150°C à 190°C , et plus préférablement de 160°C ou de 170°C ;
lorsque l'extrusion plastifiante est effectuée dans l'extrudeuse à double vis, l'extrudeuse à double vis a une vitesse de rotation de 30 tr/min à 600 tr/min, de préférence de 150 tr/min à 300 tr/min, et plus préférablement de 200 tr/min à 250 tr/min ; et
de préférence, après l'extrusion plastifiante, le procédé de préparation comprend en outre une granulation.

7. Procédé de préparation d'un matériau biodégradable selon la revendication 6, **caractérisé en ce que** lorsque l'extrusion plastifiante est effectuée dans l'extrudeuse à double vis, les zones 1 à 6 de l'extrudeuse à double vis ont des températures de 80°C à 120°C, de 120°C à 155°C, de 140°C à 190°C, de 145°C à 195°C, de 145°C à 195°C, et de 145°C à 195°C, respectivement ;
de préférence, lorsque l'extrusion plastifiante est effectuée dans l'extrudeuse à double vis, les zones 1 à 6 de l'extrudeuse à double vis ont des températures de 80°C à 110°C, de 120°C à 145°C, de 140°C à 170°C, de 165°C à 175°C, de 165°C à 195°C, et de 165°C à 195°C, respectivement ; et
plus préférablement, lorsque l'extrusion plastifiante est effectuée dans l'extrudeuse à double vis, les zones 1 à 6 de l'extrudeuse à double vis ont des températures de 80°C à 90°C, de 120°C à 135°C, de 160°C à 170°C, de 165°C à 175°C, de 165°C à 175°C, et de 165°C à 175°C, respectivement.

8. Matériau biodégradable, **caractérisé en ce que** le matériau biodégradable est préparé par le procédé de préparation du matériau biodégradable selon l'une quelconque des revendications 5 à 7.

9. Utilisation du matériau biodégradable selon la revendication 8 en tant que matière première dans la préparation d'un produit biodégradable.
